# EUROPÄISCHE PATENTSCHRIFT

(11) **EP 0 836 029 B1**
(45) Veröffentlichungstag und Bekanntmachung des Hinweises auf die Patenterteilung: **09.01.2002**
(21) Anmeldenummer: 97116457.9
(22) Anmeldetag: 22.09.1997
(51) Int. Cl.: F16D 66/02

(54) **Einrichtung zum Überwachen der Stärke eines Bremsbelages bei einer Kraftfahrzeug-Scheibenbremse**
Device for monitoring the thickness of a vehicle disc brake lining
Dispositif de surveillance de l'épaisseur de garniture d'un frein à disque pour véhicules

(30) Priorität: 12.10.1996 DE 19642250
(43) Veröffentlichungstag der Anmeldung: 15.04.1998
(73) Patentinhaber: Hirschmann Austria GmbH, 6830 Rankweil-Brederis (AT)
(72) Erfinder: Federer, Arnold, 6840 Götzis (AT); Waibel, Thomas, Dr., 6840 Götzis (AT)
(74) Vertreter: Hefel, Herbert, Dipl.-Ing.

(56) Entgegenhaltungen:
- DE-C- 4 308 272
- DE-C- 19 504 822
- US-A- 4 606 435

## Beschreibung

Die Erfindung bezieht sich auf eine Einrichtung zum Überwachen der Stärke eines Bremsbelages bei einer Kraftfahrzeug-Scheibenbremse, bei welcher im Bremsbelag eine Drahtschleife als Fühler eingebettet ist und die außerhalb des Bremsbelages liegenden Enden der Drahtschleife mit einem Stecker verbunden sind, der mit einem am Radsattel festgelegten zweiten Steckerteil kontaktgebend verbindbar ist und die mit diesem zweiten Steckerteil verbundene Leitung zu einer Sensorelektronik führt, die ihrerseits mit einer elektronischen Steuer- und/oder Regeleinrichtung zur Auswertung der Signale verbunden ist.

Einrichtungen dieser Art sind bekannt (DE 195 04 822 C1 oder auch zB. DE-C-4308272). Bei einer praktischen Ausführung einer solchen Einrichtung trägt die im Bremsbelag eingebettete Drahtschleife an ihrem freien Ende einen Stecker, der mit einem am Radsattel vorgesehenen zweiten Stecker verbindbar ist. Von diesem zweiten Stecker führt eine ca. 10 bis 20 cm lange Leitung zu einer Sensorelektronik, die ebenfalls am Radsattel angeordnet ist und in welcher elektronische Bauteile angeordnet sind, die der Überwachung der Raddrehzahl dienen. Auch die Elektronik für die Detektierung der Signale des Bremsbelagfühlers ist mit der erwähnten Sensorelektronik für die Überwachung der Raddrehzahl in einem gemeinsamen Gehäuse untergebracht. Von diesem Gehäuse mit der darin eingebetteten Sensorelektronik am Radsattel führt dann eine Verbindungsleitung zur Steuer- und Regeleinrichtung, die üblicherweise am Armaturenbrett des Kraftfahrzeuges festgelegt ist und die der Auswertung der ankommenden Signale dient.

Es ist nun bekannt, daß in der ersterwähnten Leitung, die den am Radsattel vorgesehenen Stecker mit der Sensorelektronik verbindet, statische Spannungen bis zu 100 kV auftreten. Die Gründe, die zu diesen hohen statischen Aufladungen an der erwähnten Stelle führen, sind nicht restlos geklärt. Es ist anzunehmen, daß diese hohen Spannungen durch das Schleifen der Bremsbeläge an der Bremsscheibe entstehen. Diese hohen Spannungen können die elektronischen Bauteile gefährden, die in der Regel nur mit internen Maßnahmen gegen statische Spannungen bis zu 20 kV schützbar sind. Für statische Spannungen, die über diesem Wert liegen, müssen äußere Bauelemente beigezogen werden, für welche jedoch bei Einrichtungen der gegenständlichen Art kein hinreichender Platz vorhanden ist, abgesehen davon, daß dadurch die Montage erschwert würde.

Diesen Schwierigkeiten zu begegnen ist Aufgabe der Erfindung, die zur Lösung des aufgezeigten Problems vorschlägt, daß die zweiadrige, das zweite Steckerteil und die Sensoreletronik verbindende Leitung einen großen Widerstand aufweist und/oder zwischen zumindest einer Ader dieser Leitung und dem Chassis des Kraftfahrzeuges oder dem Radsattel eine Funkenstrecke vorgesehen ist.

Der hier erforderliche große Widerstand kann als konzentriertes Bauteil in einer der beiden Adern der Verbindungsleitung vorgesehen werden. Diese Widerstände sind allerdings relativ klein, so daß nicht auszuschließen ist, daß sich die hohe statische Spannung parallel zum Widerstand entlädt, also diese hohe statische Spannung mit einem Entladefunken das konzentrierte Bauteil überspringt. Durch den Einsatz von zusätzlichem Isoliermaterial kann einem solchen Überschlag zwar vorgebeugt werden, dieses Material benötigt aber wieder viel Platz, der an der besagten Stelle nicht vorhanden ist.

Es ist daher zweckmäßig, die Leitung bzw. eine Ader dieser Leitung als Widerstandsleitung auszubilden. Anstelle eines solchen großen Widerstandes im Leitungszug oder auch zusätzlich dazu kann eine Funkenstrecke vorgesehen werden, und zwar gegenüber Masse. Es ist dabei vorteilhaft, die Funkenstrecke in das am Radsattel angebrachte Steckerteil zu integrieren.

Anhand der Zeichnung wird die Erfindung näher erläutert. Es zeigen:
- Die Fig. 1 bis 4: schematisch nach Art von Blockschaltbildern verschiedene prinzipielle Ausführungsformen der Erfindung;
- die Fig. 5 bis 7: Querschnitte durch das am Radsattel festgelegte Steckerteil mit in das Steckerteil integrierter Funkenstrecke; in allen Figuren sind gleiche bzw. gleichwertige Teile mit identischen Hinweisziffern versehen.

In einem Bremsbelag einer hier nicht dargestellten Scheibenbremse eines Kraftfahrzeuges, angedeutet durch eine strichlierte Linie 1, ist eine Drahtschleife 2 eingebettet, die als Fühler dient und die Teil eines Kurzschlußkreises ist. Ist der Bremsbelag abgefahren, hat er seine geringste zulässige Stärke erreicht, so wird diese Drahtschleife 2 durch einen Bremsvorgang aufgetrennt und damit der Kurzschlußkreis geöffnet. Diese beiden Extremwerte, Kurzschluß einerseits und offener Kreis andererseits, sind ohne Schwierigkeiten detektierbar und werden von einer Sensorelektronik und einer ihr nachgeschalteten Regel- und Steuereinrichtung ausgewertet. In einer praktischen Ausführungsform sind die Enden dieser Drahtschleife 2, die außerhalb des Bremsbelages liegen, mit einem Stecker 3 bestückt, der in ein zweites Steckerteil 4 kontaktgebend einsetzbar ist.

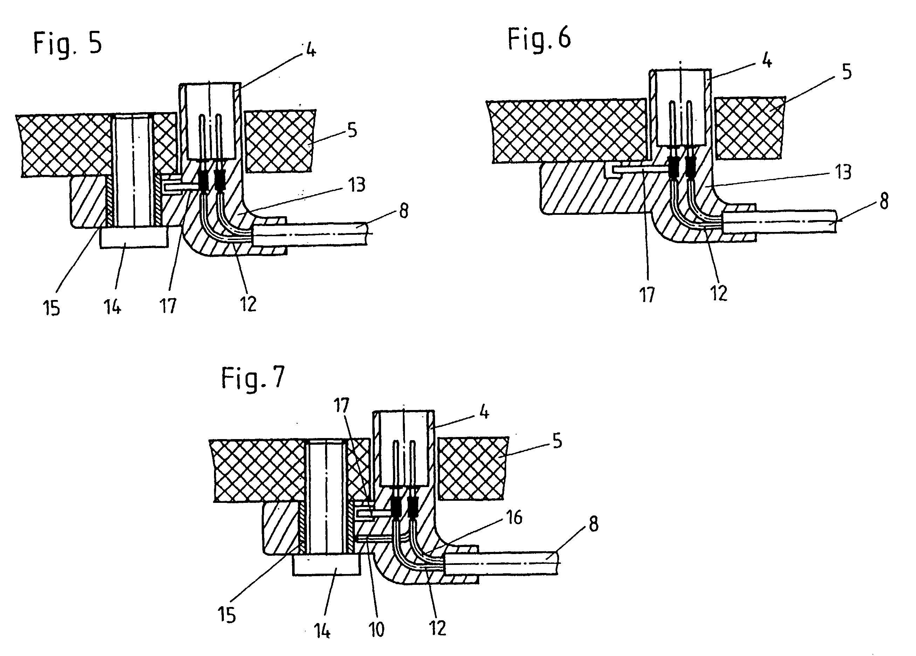

Dieses zweite Steckerteil 4 ist am Radsattel 5 befestigt (Fig. 5 bis 7). Ebenfalls auf dem erwähnten Radsattel 5 sitzt die Sensorelektronik 6, die der Drehzahlüberwachung dient. Um den Verdrahtungsaufwand gering zu halten, ist die der Überwachung der Bremsbelagstärke dienende Elektronik im selben Gehäuse untergebracht wie die der Überwachung der Drehzahl dienende Elektronik, so daß nur eine Leitung 7 erforderlich ist, die zur Regel- und Steuereinheit führt, die hier nicht dargestellt ist und die die über die Leitung 7 ankommenden Signale auswertet. Eine solche, Verdrahtungsaufwand sparende Sensorelektronik bzw. die dafür vorgesehene Schaltung ist in der eingangs erwähnten DE 195 04 822 C1 gezeigt und beschrieben.

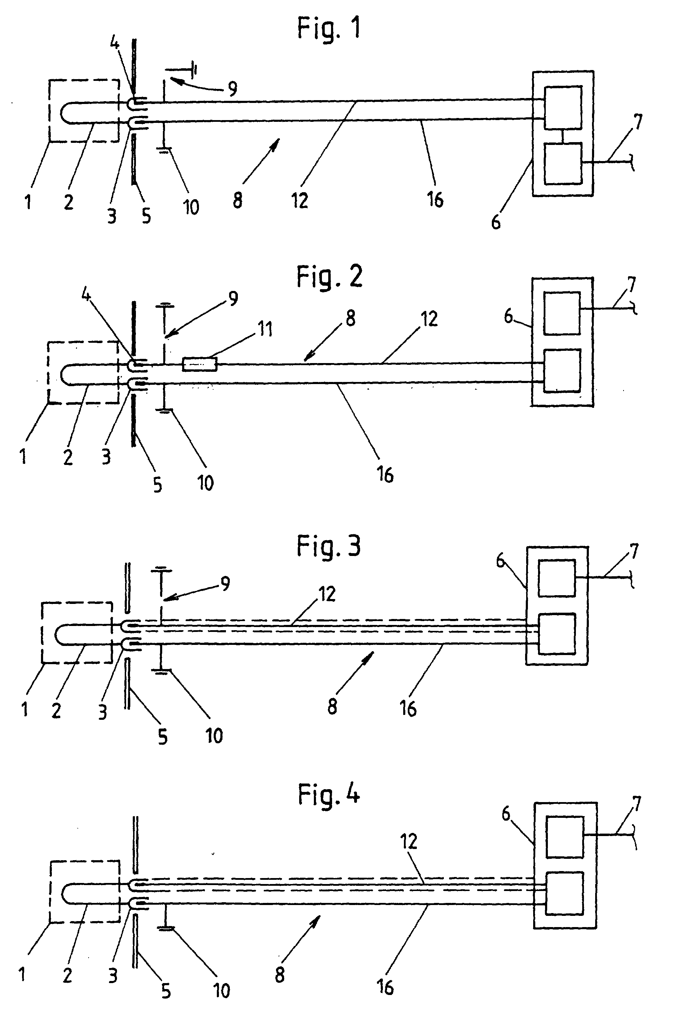

Auf der das Steckerteil 4 auf dem Radsattel 5 und die Sensorelektronik 6 verbindenden Leitung 8 treten die eingangs geschilderten hohen statischen Spannungen auf. Um die Sensorelektronik zu schützen, ist hier beim Ausführungsbeispiel nach Fig. 1 an der Ader 12 eine Funkenstrecke 9 gegen Masse 10 vorgesehen. Die eine Ader 16 der zweiadrigen Leitung 8 liegt an Masse 10.

Beim Ausführungsbeispiel nach Fig. 2 ist zusätzlich zur erwähnten Funkenstrecke 9 noch ein hochohmiger Widerstand 11 in die eine Ader 12 der Leitung 8 integriert. Da solche konzentrierte Bauelemente nur geringe räumliche Abmessungen haben, so daß es nicht ausgeschlossen ist, daß sich die hohe statische Spannung parallel zum Widerstand 11 entlädt, diesen also mit einem Entladefunken überspringt, ist nach einem andren Ausführungsbeispiel gemäß Fig. 4 vorgesehen, die eine Ader 12 der Leitung 8 als Widerstandsleitung auszubilden, also als eine Ader mit extrem hohem ohmischem Widerstand. In der Praxis ist diese Leitung 8 relativ kurz, sie beträgt ca. 10 bis 20 cm. Zusätzlich kann auch beim Ausführungsbeispiel nach Fig. 4 eine Funkenstrecke 9 mit der einen Ader 12 verbunden sein (Fig. 3).

Die Fig. 5, 6 und 7 zeigen nun das Steckerteil 4, das am Radsattel 5 befestigt ist, jeweils im Querschnitt. Hier ist das Steckergehäuse 13 mittels der Befestigungsschraube 14 am Radsattel 5 festgelegt, wobei die Befestigungsschraube 14 eine Verschraubhülse 15 aus elektrisch leitendem Material durchsetzt. Die eine Ader 12 der Leitung 8 ist mit einer Elektrode 17 bestückt, die gegen die elektrisch leitende Verschraubhülse 15 gerichtet ist und die mit dieser zusammen eine Funkenstrecke 9 bildet. Da das Steckerteil 4 zusammen mit der Verschraubung fabriksseitig fertiggestellt wird, ist die Funkenstrecke exakt definierbar.

Beim Ausführungsbeispiel nach Fig. 6 ist die Art der Festlegung des Steckerteiles 4 am Radsattel 5 im einzelnen nicht dargestellt. Gezeigt ist hier jedoch, daß die Funkenstrecke 9 hier über die Elektrode 17 und den Radsattel 5 gebildet ist, der die Befestigungsebene für das Steckerteil 4 definiert, wobei auch hier die Funkenstrecke exakt festlegbar ist.

Das Ausführungsbeispiel nach Fig. 7 entspricht jenem nach Fig. 5, jedoch ist hier der Masseanschluß der zweiten Ader 16 der Leitung 8 an die Verschraubhülse 15 gezeigt.

In den Fig. 5 bis 7 ist der Stecker 3 an den Enden der Drahtschleife 2 des Bremsbelages nicht gezeigt. Dieser ist nur schematisch in den Fig. 1 bis 4 angedeutet. Dieser Stecker 3 wird bei der Montage in das Steckerteil 4 eingesetzt.

### Legende zu den Hinweisziffern:

- 1: strichlierte Linie
- 2: Drahtschleife
- 3: Stecker
- 4: zweiter Steckerteil
- 5: Radsattel
- 6: Sensorelektronik
- 7: Leitung
- 8: Leitung
- 9: Funkenstrecke
- 10: Masse
- 11: Widerstand
- 12: Ader
- 13: Steckergehäuse
- 14: Befestigungsschraube
- 15: Verschraubhülse
- 16: Ader
- 17: Elektrode

## Patentansprüche

1. Einrichtung zum Überwachen der Stärke eines Bremsbelages bei einer Kraftfahrzeug-Scheibenbremse, bei welcher im Bremsbelag eine Drahtschleife als Fühler eingebettet ist und die außerhalb des Bremsbelages liegenden Enden der Drahtschleife mit einem Stecker verbunden sind, der mit einem am Radsattel festgelegten zweiten Steckerteil kontaktgebend verbindbar ist und die mit diesem zweiten Steckerteil verbundene Leitung zu einer Sensorelektronik führt, die ihrerseits mit einer elektronischen Steuer- und/oder Regeleinrichtung zur Auswertung der Signale verbunden ist, **dadurch gekennzeichnet, daß** die zweiadrige, das zweite Steckerteil (4) und die Sensoreletronik (6) verbindende Leitung (8) einen großen Widerstand aufweist und/oder zwischen zumindest einer Ader (12) dieser Leitung (8) und dem Chassis des Kraftfahrzeuges oder dem Radsattel (5) eine Funkenstrecke (9) vorgesehen ist.

2. Einrichtung nach Anspruch 1, **dadurch gekennzeichnet, daß** die Größe des Widerstandes mindestens 100 k Ω oder mehr beträgt.

3. Einrichtung nach Anspruch 1 oder 2, **dadurch gekennzeichnet, daß** mindestens eine der beiden Adern (12) der Leitung (8) als Widerstandsleitung ausgebildet ist (Fig. 3, 4).

4. Einrichtung nach Anspruch 1 oder 2, **dadurch gekennzeichnet, daß** der Widerstand (11) als konzentriertes Bauteil in einer der beiden Adern (12) der Leitung (8) vorgesehen ist (Fig. 2).

5. Einrichtung nach einem der Ansprüche 1 bis 4, **dadurch gekennzeichnet, daß** die den kleinen Widerstand aufweisende Ader (16) der Leitung (8) an Masse (10) angeschlossen ist.

6. Einrichtung nach Anspruch 1, **dadurch gekennzeichnet, daß** eine Elektrode (17) der Funkenstrecke (9) an der den großen Widerstand aufweisenden Ader (12) der Leitung (8) liegt.

7. Einrichtung nach Anspruch 1 oder 6, **dadurch gekennzeichnet, daß** die Funkenstrecke (9) in das am Radsattel (5) vorgesehene Steckerteil (4) integriert ist.

## Claims

1. A device for monitoring the thickness of a brake lining in a motor vehicle disc brake, wherein a wire loop is embedded as a sensor in the brake lining, and the ends of the wire loop lying outside the brake lining are connected to a plug connectable in a contact-making manner to a second plug part fixed to the brake caliper, and the cable connected to this second plug part leads to sensor electronics for their part connected to an electronic control and/or regulating device for evaluating the signals, **characterised in that** the twin-wire cable (8) connecting the second plug part (4) and the sensor electronics (6) has high resistance, and/or a spark gap (9) is provided between at least one wire (12) of this cable (8) and the chassis of the motor vehicle or the brake caliper (5).

2. A device according to claim 1, **characterised in that** the magnitude of the resistance is at least 100 kΩ or more.

3. A device according to claim 1 or 2, **characterised in that** at least one of the two wires (12) of the cable (8) is formed as a resistance line (figs. 3, 4).

4. A device according to claim 1 or 2, **characterised in that** the resistor (11) is provided as a concentrated component in one of the two wires (12) of the cable (8) (fig. 2).

5. A device according to any one of claims 1 to 4, **characterised in that** the low-resistance wire (16) of the cable (8) is connected to earth (10).

6. A device according to claim 1, **characterised in that** an electrode (17) of the spark gap (9) lies on the high-resistance wire (12) of the cable (8).

7. A device according to claim 1 or 6, **characterised in that** the spark gap (9) is integrated into the plug part (4) provided on the brake caliper (5).

## Revendications

1. Dispositif pour surveiller l'épaisseur d'une garniture d'un frein à disque de véhicule automobile, dans lequel une boucle de fil métallique est noyée comme capteur dans la garniture de frein et les extrémités de la boucle de fil se trouvant à l'extérieur de la garniture de frein sont reliées à un connecteur, qui peut être connecté à une deuxième partie de connecteur fixée sur la selle de roue pour établir un contact et la ligne connectée à cette deuxième partie de connecteur mène à un circuit électronique capteur, qui est connecté, pour sa part, à un dispositif électronique de commande et/ou de régulation pour exploiter les signaux, **caractérisé en ce que** la ligne à deux fils (8) connectant la deuxième partie de connecteur (4) et le système électronique capteur (6) présente une grande résistance et/ou il est prévu entre au moins un fil (8) de cette ligne (8) et le châssis du véhicule automobile ou la selle de roue (5) un éclateur (9).

2. Dispositif selon la revendication 1, **caractérisé en ce que** la grandeur de la résistance est d'au moins 100 kΩ ou plus.

3. Dispositif selon la revendication 1 ou 2, **caractérisé en ce qu'**au moins l'un des deux fils (12) de la ligne (8) est conformé en ligne de résistance (Fig. 3, 4).

4. Dispositif selon la revendication 1 ou 2, **caractérisé en ce que** la résistance (11) est prévue sous la forme d'un composant concentré dans l'un des deux fils (12) de la ligne (8) (Fig. 2).

5. Dispositif selon l'une quelconque des revendications 1 à 4, **caractérisé en ce que** le fil (16) de la ligne (8) présentant la résistance faible est connecté à la masse (10).

6. Dispositif selon la revendication 1, **caractérisé en ce qu'**une électrode (17) de l'éclateur (9) s'applique sur le fil (12) de la ligne (8) présentant la grande résistance.

7. Dispositif selon la revendication 1 ou 6, **caractérisé en ce que** l'éclateur (9) est intégré à la partie de connecteur (4) prévue dans la selle de roue (5).
